# EUROPEAN PATENT SPECIFICATION

(11) **EP 4 530 255 B1**
(45) Date of publication and mention of the grant of the patent: **22.07.2026**
(21) Application number: 24713377.0
(22) Date of filing: 25.03.2024
(51) Int. Cl.: C01B 33/18, C01B 33/12

(54) **METHOD FOR PREPARING HIGH-PURITY CRISTOBALITE**
VERFAHREN ZUR HERSTELLUNG VON HOCHREINEM CRISTOBALIT
PROCÉDÉ DE PRÉPARATION DE CRISTOBALITE DE HAUTE PURETÉ

(30) Priority: 07.08.2023 CN 202310980924
(43) Date of publication of application: 02.04.2025
(73) Proprietor: Anhui Estone Material Technology Co., Ltd., Bengbu, Anhui 233400 (CN)
(72) Inventor: JIANG, Xuexin, Bengbu, Anhui 233400 (CN); CHEN, Bo, Bengbu, Anhui 233400 (CN)
(74) Representative: Bayramoglu et al.
(86) International application number: PCT/CN2024/083450
(87) International publication number: WO 2025/030863

(56) References cited:
- EP-A1- 1 580 170
- EP-A2- 0 283 933
- CN-A- 1 714 053
- CN-A- 108 675 308
- CN-A- 108 821 295
- CN-A- 116 873 943
- US-A- 4 853 198
- US-A- 5 154 905
- US-A- 5 154 905

## Description

### Technical Field

The present invention pertains to the technical field of quartz sand, particularly focusing on a method for the preparation of high-purity cristobalite.

### Background Art

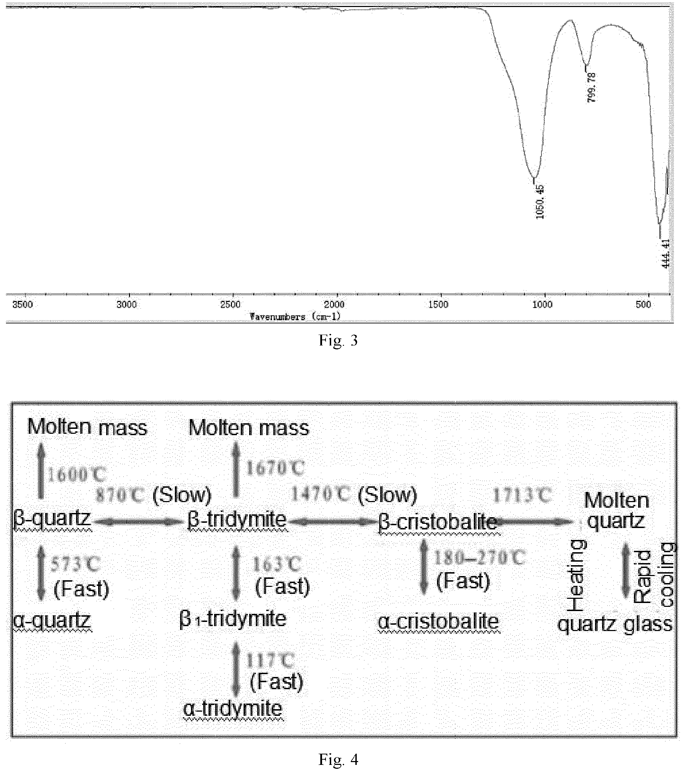

Quartz (SiO₂) is an oxide of silicon with a framework structure, having various homogenous variants. At atmospheric pressure, there are seven crystal types: α-quartz, β-quartz, α-tridymite, β1-tridymite, β-tridymite, α-cristobalite, and β-cristobalite. Their transition temperatures are illustrated in Figure 4. Among them, β-type represents the stable crystal type at high temperatures, while α-type represents the stable crystal type at low temperatures. Quartz is widely distributed in nature, and unless specifically stated, the term "quartz" typically refers to α-quartz.

High-purity quartz sand generally refers to quartz with a silica content greater than 99.9%. Based on SiO₂ purity, high-purity quartz products can be classified into four grades: high-end ω (SiO₂) ≥ 99.998% (4N8), mid-high ω (SiO₂) ≥ 99.995% (4N5), mid-range ω (SiO₂) ≥ 99.99% (4N), and low-end ω (SiO₂) ≥ 99.9% (3N) (refer to "Concept and Classification of High-Purity Quartz Raw Materials," Conservation and Utilization of Mineral Resources, October 2022, Issue 5). However, untreated natural quartz is challenging to meet the quality requirements of high-purity quartz. In other words, high-purity quartz sand is derived from natural quartz deposits and processed through a complex purification process to achieve extremely high SiO₂ purity. In addition, due to constraints in subsequent product preparation processes, high-purity quartz sand has strict requirements for particle size (typically 40-200 mesh) and mineral phases. Therefore, commonly mentioned silicon powders, white carbon blacks, and other amorphous silicas, even with high purity, do not qualify as high-purity quartz sand.

Impurity elements in natural quartz sand mainly include Al, K, Na, Li, Ca, Cu, B, Fe, Mn, Co, Ti, P, etc. Among these impurity elements, monovalent and divalent ions exist in the quartz lattice as charge-compensating defects in the form of interstitial atoms. Trivalent, tetravalent, and pentavalent ions (homologous impurities) primarily exist within the lattice. To remove impurities from quartz sand, various processes have been proposed, as documented by Zhang Haiqi et al. in the paper "Characteristics of Impurities in High-Purity Quartz and Progress in Deep Chemical Purification Technology" (Conservation and Utilization of Mineral Resources, August 2022, Issue 4). The paper details existing purification technologies for quartz sand, emphasizing two main methods: physical and chemical. Physical purification involves processes such as color sorting, scrubbing, reselection, magnetic separation, and flotation. However, gas-liquid inclusions and intralattice homologous impurities are the main sources of impurities, and physical purification cannot eliminate these impurities, calling for chemical purification. Chemical deep purification mainly includes acid (alkali, salt) treatment and heat treatment. Acid (alkali, salt) treatment primarily removes impurities on the surface or embedded within quartz sand particles in the form of gas-liquid inclusions, while heat treatment utilizes high temperatures to crack enclosures, reducing gas-liquid impurities (not completely removed).

Compared to physical purification methods, chemical purification operations are complex and costly but are the most effective and essential in preparing high-purity quartz.

However, there are the following problems in the existing technology:
1) Quartz stone needs to undergo multiple steps such as acid washing, flotation, magnetic separation, reselection, high-temperature water quenching, and chloride roasting before being processed into high-purity quartz sand. The process is lengthy, and acid washing for impurity removal is inefficient and complex, easily introducing exogenous impurities such as iron, sodium, aluminum, etc.
2) The hydrofluoric acid, hydrochloric acid, and nitric acid used in acid washing have high concentrations and large quantities, leading to the generation of a significant amount of wastewater containing fluorine and chlorine during acid washing, increasing processing costs.

In the study "Thermal Kinetic Desorption of Gas-Liquid Impurities in Natural Quartz" by Jiang Xuexin et al. (Journal of the Chinese Ceramic Society, October 2004), a thorough investigation into the impact of impurities in quartz on quartz products is conducted. It is found that quartz sand, due to the presence of gas-liquid inclusions and a high content of hydroxyl groups on the surface (generally above 80 ppm), tends to produce bubbles during the manufacturing of quartz products, affecting product quality.

Various methods for preparing cristobalite are known in the art. For example, US5154905A ("D1") discloses a method for producing cristobalite by drying, calcining, and ball milling amorphous silica particles, but does not teach the use of a silane coupling agent treatment for a reduction of content of hydroxyl groups. CN108675308A ("D2") describes a process for preparing cristobalite by calcining amorphous silica, followed by grinding and sieving, but is also silent on coupling agent treatment. EP1580170A1 ("D3") also relates to the preparation of cristobalite, but does not disclose the specific process steps. These documents are incorporated herein by reference for background purposes.

### Invention Disclosure

To address the issues mentioned in the background art above, the present invention provides a method for preparing high-purity cristobalite, obtaining high-purity cristobalite by drying amorphous silica at 100°C to 150°C for 1 to 2 hours, treating with a silane coupling agent, wherein the silane coupling agent comprises only carbon, silicon, hydrogen, and oxygen elements, calcining at 1100°C to 1700°C for 2 to 10 hours, and dispersing; wherein the total content of elements Al, B, Ca, Cr, Cu, Fe, K, Li, Mg, Mn, Na, Ni, P, Ti, and Zn in the high-purity cristobalite is less than 20 ppm.

Preferably, the amorphous silica includes but is not limited to that obtained through the oxidation of metallic silicon.

The oxidation of metallic silicon includes the combustion of metallic silicon, or the high- temperature reaction of metallic silicon with high-purity water, or the conversion of metallic silicon into silicon-containing organic compounds, such as silane, followed by calcination to transform into any one of various forms of amorphous nano-silica.

Preferably, the particle size of the amorphous silica is in the range of 5 nanometers to 1 micron.

Preferably, the particle size of the high-purity cristobalite is in the range of 120 to 450 microns.

Preferably, the silane coupling agent containing only carbon, silicon, hydrogen, and oxygen elements has a carbon chain length not exceeding 5.

In comparison with existing technologies, the beneficial effects of the present invention are as follows:
1. Amorphous silica has a large specific surface area and is rich in hydroxyl groups. Therefore, the cristobalite transformed from amorphous silica is prone to have pores. To eliminate these pores, the present invention employs a coupling agent for surface treatment followed by calcination. Data shows a significant reduction in hydroxyl groups.
2. Under the same mass of coupling agent, the inventor chooses a silane coupling agent with a short chain length, resulting in fewer pores in cristobalite. Additionally, there is a certain reduction in calcination temperature and time. The possible reason is that the silane coupling agent decomposes at high temperatures, forming silica. Due to the small particle size of the decomposed silica, it preferentially forms nuclei, promoting the overall crystalline transformation.
3. The high-purity cristobalite obtained by the invention has fewer hydroxyl groups compared to existing high-purity quartz, except for elements such as Al, B, Ca, Cr, Cu, Fe, K, Li, Mg, Mn, Na, Ni, P, Ti, Zn.
4. The use of silane coupling agent treatment in the present invention reduces the pores in cristobalite, as well as the calcination temperature and time, leading to energy savings.

### Illustration

Figure 1 is the XRD graph of high-purity cristobalite in Example 7.
Figure 2 is the infrared spectrum of amorphous silica A.
Figure 3 is the infrared spectrum of high-purity cristobalite in Example 7.
Figure 4 is the graph of atmospheric transition temperatures between various crystal types of silica.

### Detailed Description of the Embodiments

Unless otherwise specified, the raw materials and reagents used in the following examples are commercially available or can be prepared by known methods.

The particle size of the amorphous silica in the present invention is in the range of 5 nanometers to 1 micron, with a specific surface area of 90 to 200m²/g. The source can be purchased from the market, such as Aladdin, or prepared by the following method.

Photovoltaic-grade polycrystalline silicon is burned in oxygen under controlled conditions to obtain high-purity amorphous silica with different particle sizes.

In the present invention, amorphous silica (particle size 5 nanometers, specific surface area 200m²/g) is labeled as amorphous silica A.

Amorphous silica (particle size 10 nanometers, specific surface area 150m²/g) is labeled as amorphous silica B.

Amorphous silica (particle size 1 micron, specific surface area 90m²/g) is labeled as amorphous silica C.

### Reference Example 1

Amorphous silica A is dried at 100°C for 2 hours, calcined at 1170°C for 10 hours, naturally cooled, and dispersed with airflow to obtain high-purity cristobalite with a particle size of 120 microns.

### Reference Example 2

Amorphous silica A is dried at 150°C for 1 hour, calcined at 1700°C for 2 hours, naturally cooled, and dispersed with airflow to obtain high-purity cristobalite with a particle size of 200 microns.

### Reference Example 3

Amorphous silica B is dried at 100°C for 2 hours, calcined at 1170°C for 10 hours, naturally cooled, and dispersed with airflow to obtain high-purity cristobalite with a particle size of 380 microns.

### Reference

### Example 4 (Demonstrating the result of preparing high-purity cristobalite from micronlevel raw materials)

Amorphous silica C is dried at 100°C for 2 hours, calcined at 1170°C for 10 hours, naturally cooled, and dispersed with airflow to obtain high-purity cristobalite with a particle size of 630 microns.

### Example 5

Amorphous silica A (3 kg) is dried at 100°C for 2 hours. A modified liquid is obtained by mixing 30g of coupling agent (CH₃O)₃Si(CH₂)₁₀CH₃ with 100g of ethanol. The modified liquid is mixed uniformly with the dried amorphous silica, dried at 100°C for 2 hours, and then calcined at 1170°C for 10 hours. The resulting high-purity cristobalite has a particle size of 180 microns.

### Example 6

Amorphous silica A (3 kg) is dried at 100°C for 2 hours. A modified liquid is obtained by mixing 30g of coupling agent (CH₃O)₃Si(CH₂)₁₀CH₃ with 100g of ethanol. The modified liquid is mixed uniformly with the dried amorphous silica, dried at 100°C for 2 hours, and then calcined at 1170°C for 10 hours. The resulting high-purity cristobalite has a particle size of 157 microns.

### Example 7

Amorphous silica A (3 kg) is dried at 100°C for 2 hours. A modified liquid is obtained by mixing 30g of coupling agent (CH₃O)₃Si(CH₂)₅CH₃ with 100g of ethanol. The modified liquid is mixed uniformly with the dried amorphous silica, dried at 100°C for 2 hours, and then calcined at 1170°C for 6 hours. The resulting high-purity cristobalite has a particle size of 135 microns.

### Comparative Example 1

Amorphous silica A (3 kg) is dried at 100°C for 2 hours. A modified liquid is obtained by mixing 30g of coupling agent (CH₃O)₃Si(CH₂)₇CH₃ with 100g of ethanol. The modified liquid is mixed uniformly with the dried amorphous silica, dried at 100°C for 2 hours, and then calcined at 1170°C for 8 hours. The resulting high-purity cristobalite has a particle size of 163 microns.

### Comparative Example 2

The high-purity quartz ITOA-6 from US Unimin Corporation is dried at 100°C for 2 hours and calcined at 1170°C for 10 hours. The resulting high-purity cristobalite has a particle size of 230 microns.

### Results and Testing

ICP-OES is used to test impurity ions in the obtained samples (detection limit is 1 ppb), and the results are shown in Table 1.

**Table 1 Impurity Ion Test Results for Raw Materials and Example Samples (Unit: ppm) [0053]**

| | Al | B | Ca | Cr | Cu | Fe | K | Li | Mg | Mn | Na | Ni | p | Ti | Zn | Total |
|---|---|---|---|---|---|---|---|---|---|---|---|---|---|---|---|---|
| Amorphous Silica A | 0.544 | ND | 0.5 | 0.015 | 0.014 | 0.065 | 0.301 | 0.215 | 0.015 | 0.099 | 0.103 | ND | ND | 0.932 | 0.281 | 2.45 |
| Amorphous Silica B | 0.287 | 0.001 | 0.024 | ND | ND | 0.012 | 0.251 | 0.205 | 0.016 | 0.011 | 0.256 | ND | ND | 0.953 | 0.874 | 2.89 |
| Amorphous Silica C | 0.272 | 0.021 | 0.04 | ND | ND | 0.03 | 0.208 | 0.306 | 0.005 | 0.035 | 0.173 | ND | ND | 0.823 | 0.765 | 2.678 |
| Example 1 | 0.752 | 0.052 | 0.513 | ND | ND | 0.043 | 0.315 | 0.181 | 0.057 | 0.083 | 0.045 | ND | ND | 0.956 | 0.297 | 3.294 |
| Example 2 | 0.612 | 0.042 | 0.512 | ND | ND | 0.045 | 0.329 | 0.098 | 0.058 | 0.124 | 0.184 | ND | ND | 0.811 | 0.543 | 3.358 |
| Example 3 | 0.747 | 0.022 | 0.557 | ND | ND | 0.041 | 0.353 | 0.195 | 0.036 | 0.092 | 0.084 | ND | ND | 0.755 | 0.396 | 3.278 |
| Example 4 | 0.654 | 0.035 | 0.566 | ND | ND | 0.048 | 0.356 | 0.174 | 0.069 | 0.119 | 0.131 | ND | ND | 0.958 | 0.562 | 3.672 |
| Example 5 | 0.129 | ND | 0.285 | 0.124 | 0.02 | 0.012 | 0.417 | ND | ND | ND | 0.069 | ND | ND | 0.897 | 0.728 | 2.681 |
| Example 6 | 0.212 | 0.018 | 0.408 | ND | ND | 0.027 | 0.268 | 0.122 | 0.016 | 0.048 | 0.218 | ND | ND | 0.971 | 0.867 | 3.175 |
| Example 7 | 0.208 | 0.014 | 0.416 | ND | ND | 0.030 | 0.258 | 0.091 | 0.005 | 0.051 | 0.023 | ND | ND | 0.983 | 0.857 | 2.936 |
| Comparative Example 1 | 0.751 | ND | 0.856 | 0.347 | 0.061 | 0.053 | 0.408 | 0.264 | 0.013 | 0.159 | 0.165 | ND | ND | 0.675 | 0.245 | 3997 |
| Comparative Example 2 | 0.204 | ND | 0.315 | 0.141 | 0.031 | 0.015 | 0.306 | ND | ND | ND | 0.064 | ND | ND | 0.829 | 0.387 | 2.292 |

The samples are measured for particle size, porosity, and crystallinity. Nitrogen adsorption-desorption is used for pore measurement, a particle size analyzer for particle size measurement, and XRD for crystallinity measurement, as shown in Table 2.

**Table 2**

| | Particle Size (nm) | Porosity (%) | Crystallinity | Content (%) |
|---|---|---|---|---|
| Example 1 | 120 | 0.63 | 94% | 99.9997 |
| Example 2 | 200 | 0.62 | 97% | 99.9997 |
| Example 3 | 380 | 0.60 | 92% | 99.9997 |
| Example 4 | 630 | 0.61 | 95% | 99.9996 |
| Example 5 | 180 | 0.28 | 98% | 99.9997 |
| Example 6 | 157 | 0.29 | 97% | 99.9997 |
| Example 7 | 135 | 0.24 | 98% | 99.9997 |
| Comparative Example 1 | 163 | 0.30 | 91% | 99.9996 |
| Comparative Example 2 | 230 | 0.42 | 96% | 99.9998 |

Table 3 shows the hydroxyl group content (in ppm) in materials before and after coupling agent treatment of Examples 5-7. The hydroxyl group content is calculated based on infrared spectra. The results are shown in Table 3.

**Table 3**

| | Hydroxyl Group Content in Materials Before Coupling Agent Treatment | Hydroxyl Group Content in Materials After Coupling Agent Treatment | Hydroxyl Group Content in Resulting Cristobalite |
|---|---|---|---|
| Example 5 | 510 | 12 | 1 |
| Example 6 | 640 | 15 | 2 |
| Example 7 | 432 | 18 | 4 |

Data Analysis: From Table 1, it can be seen that compared with the raw materials, there is a certain increase in impurity content in the products, possibly due to unavoidable contamination during the preparation process.

In Table 2, for materials treated with coupling agents, the porosity significantly decreases after high-temperature calcination. Compared between Example 6 and Example 7, the use of a long-chain silane coupling agent results in a relatively high porosity, and the use of a short-chain silane coupling agent achieves a higher crystallinity in a shorter time, making it more energy-efficient.

After coupling agent treatment, the hydroxyl group content in the materials (Table 3) significantly decreases, and in the resulting cristobalite, the hydroxyl group content further decreases.

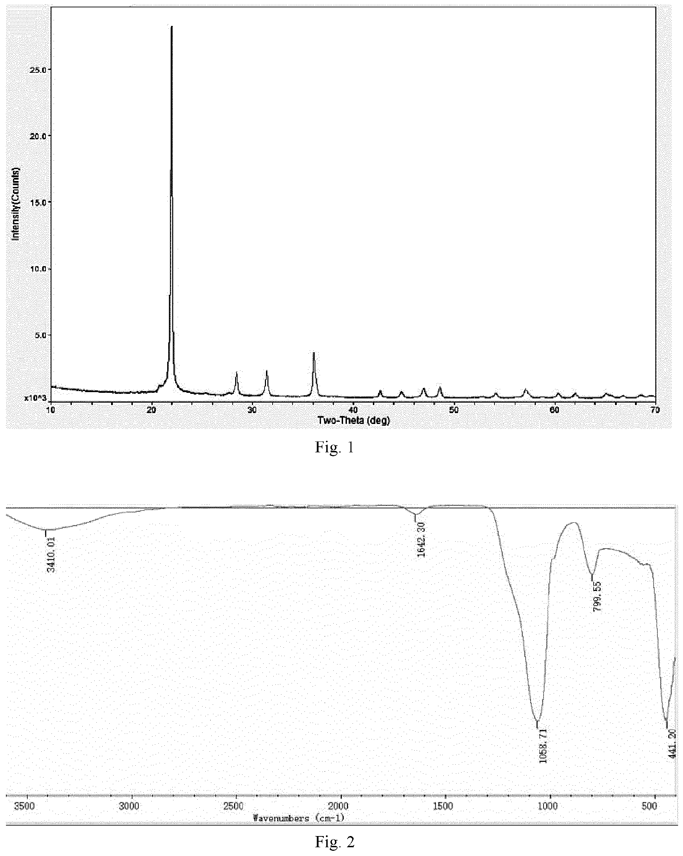

Figure 2 is the infrared spectrum of the high-purity amorphous silica raw material, its surface.

Figure 3 is the infrared spectrum of the cristobalite, showing no vibration peaks at 3410cm⁻¹ and 1642cm⁻¹, indicating the absence of hydroxyl groups on its surface.

## Claims

1. A method for the preparation of high-purity cristobalite, **characterized by** obtaining high-purity cristobalite by
drying amorphous silica at 100°C to 150°C for 1 to 2 hours,
treating with a silane coupling agent, wherein the silane coupling agent comprises only carbon, silicon, hydrogen, and oxygen elements,
calcining at 1100°C to 1700°C for 2 to 10 hours, and
dispersing; wherein the total content of elements Al, B, Ca, Cr, Cu, Fe, K, Li, Mg, Mn, Na, Ni, P, Ti, and Zn in the high-purity cristobalite is less than 20 ppm.

2. A method for the preparation of high-purity cristobalite according to Claim 1, wherein the amorphous silica comprises, but is not limited to, being obtained through the oxidation of metallic silicon.

3. A method for the preparation of high-purity cristobalite according to Claim 2, wherein the metallic silicon is oxidized by burning, or metallic silicon reacts at high temperatures with high-purity water, or metallic silicon is transformed into silicon-containing organic compounds, such as silane, followed by calcination to transform into any one of amorphous nano-sized silica.

4. A method for the preparation of high-purity cristobalite according to Claim 1, wherein the particle size of the amorphous silica is 5 nanometers to 1 micron.

5. A method for the preparation of high-purity cristobalite according to Claim 1, wherein the particle size of the high-purity cristobalite is 120 to 450 microns.

6. A method for the preparation of high-purity cristobalite according to Claim 1, wherein the silane coupling agent containing only carbon, silicon, hydrogen, and oxygen elements has a carbon chain length not exceeding 5.

## Patentansprüche

1. Verfahren zur Herstellung von hochreinem Cristobalit, **gekennzeichnet durch** Erhalten von hochreinem Cristobalit durch
Trocknen von amorphem Siliciumdioxid bei 100 °C bis 150 °C für 1 bis 2 Stunden, Behandeln mit einem Silankupplungsmittel, wobei das Silankupplungsmittel ausschließlich die Elemente Kohlenstoff, Silicium, Wasserstoff und Sauerstoff umfasst,
Kalzinieren bei 1100 °C bis 1700 °C für 2 bis 10 Stunden, und
Dispergieren; wobei der Gesamtgehalt der Elemente Al, B, Ca, Cr, Cu, Fe, K, Li, Mg, Mn, Na, Ni, P, Ti und Zn in dem hochreinen Cristobalit weniger als 20 ppm beträgt.

2. Verfahren zur Herstellung von hochreinem Cristobalit nach Anspruch 1, wobei das amorphe Siliciumdioxid unter anderem, aber nicht ausschließlich, durch Oxidation von metallischem Silicium erhalten wird.

3. Verfahren zur Herstellung von hochreinem Cristobalit nach Anspruch 2, wobei das metallische Silicium durch Verbrennen oxidiert wird, oder metallisches Silicium bei hohen Temperaturen mit hochreinem Wasser reagiert, oder metallisches Silicium in siliciumhaltige organische Verbindungen, wie Silan, umgewandelt wird, gefolgt von einer Kalzinierung zur Umwandlung in eine beliebige Form von amorphem nanoskaligem Siliciumdioxid.

4. Verfahren zur Herstellung von hochreinem Cristobalit nach Anspruch 1, wobei die Partikelgröße des amorphen Siliciumdioxids 5 Nanometer bis 1 Mikrometer beträgt.

5. Verfahren zur Herstellung von hochreinem Cristobalit nach Anspruch 1, wobei die Partikelgröße des hochreinen Cristobalits 120 bis 450 Mikrometer beträgt.

6. Verfahren zur Herstellung von hochreinem Cristobalit nach Anspruch 1, wobei das ausschließlich die Elemente Kohlenstoff, Silicium, Wasserstoff und Sauerstoff enthaltende Silankupplungsmittel eine Kohlenstoffkettenlänge von nicht mehr als 5 aufweist.

## Revendications

1. Procédé de préparation de cristobalite de haute pureté, **caractérisé par** l'obtention de cristobalite de haute pureté par
séchage de la silice amorphe à 100°C à 150°C pendant 1 à 2 heures,
traitement avec un agent de couplage au silane, dans lequel l'agent de couplage au silane comprend seulement les éléments carbone, silicium, hydrogène et oxygène,
calcination à 1100°C à 1700°C pendant 2 à 10 heures, et
dispersion ; dans lequel la teneur totale en éléments Al, B, Ca, Cr, Cu, Fe, K, Li, Mg, Mn, Na, Ni, P, Ti et Zn dans la cristobalite de haute pureté est inférieure à 20 ppm.

2. Procédé de préparation de cristobalite de haute pureté selon la revendication 1, dans lequel la silice amorphe comprend, mais n'est pas limitée à, une silice amorphe obtenue par oxydation de silicium métallique.

3. Procédé de préparation de cristobalite de haute pureté selon la revendication 2, dans lequel le silicium métallique est oxydé par combustion, ou le silicium métallique réagit à des températures élevées avec de l'eau de haute pureté, ou le silicium métallique est transformé en composés organiques contenant du silicium, tels que le silane, puis subit une calcination pour se transformer en une silice nanométrique amorphe quelconque.

4. Procédé de préparation de cristobalite de haute pureté selon la revendication 1, dans lequel la taille de particule de la silice amorphe est de 5 nanomètres à 1 micron.

5. Procédé de préparation de cristobalite de haute pureté selon la revendication 1, dans lequel la taille de particule de la cristobalite de haute pureté est de 120 à 450 microns.

6. Procédé de préparation de cristobalite de haute pureté selon la revendication 1, dans lequel l'agent de couplage au silane contenant seulement les éléments carbone, silicium, hydrogène et oxygène présente une longueur de chaîne carbonée n'excédant pas 5.
